# EUROPEAN PATENT SPECIFICATION

(11) **EP 4 634 261 B1**
(45) Date of publication and mention of the grant of the patent: **23.09.2026**
(21) Application number: 23822374.7
(22) Date of filing: 13.12.2023
(51) Int. Cl.: C08G 18/48, C08G 65/26

(54) **BATCH PROCESS FOR PREPARING A POLYETHER ALCOHOL USING A DOUBLE METAL CYANIDE CATALYST**
DISKONTINUIERLICHES VERFAHREN ZUR HERSTELLUNG VON POLYETHERALKOHOLEN UNTER VERWENDUNG VON DOPPELMETALLCYANIDKATALYSATOREN
PROCÉDÉ DISCONTINU DE PRÉPARATION D'UN POLYÉTHER ALCOOL UTILISANT UN CATALYSEUR À BASE DE CYANURE BIMÉTALLIQUE

(30) Priority: 14.12.2022 IN 202241072318
(43) Date of publication of application: 22.10.2025
(73) Proprietor: Shell Internationale Research Maatschappij B.V., 2596 HR The Hague (NL)
(72) Inventor: DAVIS, Paul, Bangalore North, 562149 Karnataka (IN); TALWALKAR, Sandip Shripad, Bangalore North, 562149 Karnataka (IN); TATAKE, Prashant Anil, 1031 HW Amsterdam (NL); MALEPPAGARI, Saikiran, Bangalore North, 562149 Karnataka (IN); KARIPEDDI, Rama Tejaswi, Bangalore North, 562149 Karnataka (IN); DHANAPAL, Prem Kumar, Bangalore North, 562149 Karnataka (IN); KUMAR, Arvind, Bangalore North, 562149 Karnataka (IN)
(74) Representative: Shell Technology IP Department
(86) International application number: PCT/EP2023/085506
(87) International publication number: WO 2024/126551

(56) References cited:
- CN-A- 108 070 082
- US-B1- 6 359 101
- US-B1- 6 441 247

## Description

### Field of the invention

The present invention relates to a process for preparing a polyether alcohol, to the polyether alcohol obtainable by said process, to a process for preparing a polyurethane foam using said polyether alcohol, to the polyurethane foam obtainable by said process, and to a shaped article comprising said polyurethane foam.

### Background of the invention

Polyether alcohols, such as polyether polyols, are commonly used for the manufacture of polyurethane foams, such as flexible polyurethane foams, which have found extensive use in a multitude of industrial and consumer applications. Polyether alcohols are also frequently referred to as polyoxyalkylene alcohols. Polyether alcohols are typically obtained by reacting a starter compound or initiator having one active hydrogen atom or a plurality of active hydrogen atoms, such as glycerol, with one or more alkylene oxides, such as ethylene oxide and propylene oxide. Known suitable catalysts for this reaction comprise composite metal cyanide complex catalysts, which are frequently also referred to as double metal cyanide (DMC) catalysts.

Advantages associated with DMC-catalysed production of polyether alcohols is that it is faster and more efficient than the traditional process using potassium hydroxide (KOH) as catalyst. Further, the DMC-catalysed process is more environmentally friendly and has a decreased carbon (CO₂) footprint. When the DMC-catalysed process is run as a batch process, the DMC catalyst is first activated. It is known to combine, at the beginning of a batch process, a small amount of alkylene oxide, for example propylene oxide, with a reactive compound, such as some polyether alcohol from a previous batch, in the presence of the DMC catalyst. After some time, the DMC catalyst is activated, as shown by a drop in alkylene oxide pressure. Then at some point after activation, more alkylene oxide and the initiator may be added continuously to produce the desired polyether alcohol. US 6 441 247 B1 is directed to a process for the preparation of polyoxyalkylene glycols by catalytic reaction of H-functional initiators with lower alkylene oxides. Polyurethane foams are prepared from these polyetherpolyols (claims 1 , 4 and 5). Example 10 of US 6 441 247 B1 discloses a batch process for preparing a polyether alcohol having a hydroxyl number of 68,4 mg KOH/g by reacting starter compound butanediol with propylene oxide in the presence of a composite metal cyanide complex catalyst. Then propylene oxide is continuously added and said continuous addition of propylene oxide is not interrupted before the total weight of propylene oxide needed to prepare polyether alcohol has been added. Finally, starter compound glycerol is added dropwise while propylene oxide is further added.

It is an object of the present invention to provide a batchwise polyether alcohol production process comprising above-mentioned separate initial DMC catalyst activation step, wherein the final polyether alcohol product has a relatively low polydispersity and viscosity, which may be demonstrated by a relatively small fraction of high molecular weight polyether alcohol.

### Summary of the invention

Surprisingly it was found that the above-mentioned object may be achieved by a batch polyether alcohol production process, wherein a polyether alcohol having a hydroxyl number of equal to or lower than 115 mg KOH/g is prepared by reacting one or more starter compounds with one or more alkylene oxides in the presence of a composite metal cyanide complex catalyst (a double metal cyanide (DMC) catalyst) and wherein alkylene oxide and starter compound are continuously added, characterized in that the addition of continuously added starter compound is started before starting the continuous addition of alkylene oxide.

Accordingly, the present invention relates to a batch process for preparing a polyether alcohol P having a hydroxyl number of equal to or lower than 115 mg KOH/g by reacting starter compound S₁ and starter compound S₂, which starter compounds have one active hydrogen atom or a plurality of active hydrogen atoms, with one or more alkylene oxides in the presence of a composite metal cyanide complex catalyst, comprising
a) forming a starter mixture comprising starter compound S₁ and the catalyst and activating the catalyst by adding an alkylene oxide, followed by
b) continuously adding an alkylene oxide; and
c) continuously adding starter compound S₂;
wherein
starter compound S₁ has (I) a nominal functionality which equals the nominal functionality of polyether alcohol P and a hydroxyl number which is within 10% of the hydroxyl number of polyether alcohol P and/or (II) an equivalent weight of from 10 to 10,000 g/mol;
starter compound S₂ has an equivalent weight of from 10 to 300 g/mol;
no alkylene oxide is added between steps a) and b), and the continuous addition of alkylene oxide in step b) is not interrupted before the total weight of alkylene oxide needed to prepare polyether alcohol P has been added; and
step c) starts before step b).

Further, the present invention relates to a polyether alcohol obtainable by the above-mentioned process.

The present invention also relates to a process for preparing a polyurethane foam comprising reacting a polyether alcohol and a polyisocyanate in the presence of a blowing agent, wherein the polyether alcohol is a polyether alcohol obtained or obtainable by the above-mentioned process.

Further, the present invention relates to a polyurethane foam obtainable by the above-mentioned process for preparing a polyurethane foam, and to a shaped article comprising a polyurethane foam obtained or obtainable by said process.

### Detailed description of the invention

While the processes and compositions of the present invention may be described in terms of "comprising", "containing" or "including" one or more various described steps and components, respectively, they can also "consist essentially of" or "consist of" said one or more various described steps and components, respectively.

In the context of the present invention, in a case where a composition comprises two or more components, these components are to be selected in an overall amount not to exceed 100 wt.%.

Where upper and lower limits are quoted for a property then a range of values defined by a combination of any of the upper limits with any of the lower limits is also implied.

The term "molecular weight" (or "MW") is used herein to refer to number average molecular weight, unless otherwise specified or context requires otherwise. The number average molecular weight of a polyether alcohol can be measured by gel permeation chromatography (GPC) or vapor pressure osmometry (VPO).

The term "hydroxyl (OH) value" or "hydroxyl (OH) number" is used herein to refer to the milligrams of potassium hydroxide equivalent to the hydroxyl content in one gram of polyether alcohol determined by wet method titration. Hence, said OH value or number is expressed in mg KOH/g. The hydroxyl number may be determined according to ASTM D4274.

The term "equivalent weight" (or "EW") is used herein to refer to the weight of polyether alcohol per reactive site. The equivalent weight is 56,100 divided by the hydroxyl value of the polyether alcohol.

The term "functionality" or "hydroxyl (OH) functionality" of a polyether alcohol refers to the number of hydroxyl groups per molecule of polyether alcohol. The nominal functionality of a polyether alcohol is the same as that of its starter compound (initiator). Unless indicated otherwise, functionality refers to the actual average functionality which may be lower than the nominal functionality and is determined by the number average molecular weight of the polyether alcohol divided by the equivalent weight of the polyether alcohol.

The term "primary hydroxyl content" (or "PHC") is used herein to refer to the relative proportion (in %) of primary hydroxyl groups in a polyether alcohol based on total number of hydroxyl groups including primary and secondary hydroxyl groups. The primary hydroxyl content may be determined according to ASTM D4273.

The terms "ethylene oxide content" and "propylene oxide content", respectively, in relation to a polyether alcohol refer to those parts of the polyether alcohol which are derived from ethylene oxide and propylene oxide, respectively. Said contents may also be referred to as oxyethylene content and oxypropylene content, respectively. Further, said contents are based herein on total alkylene oxide weight. The ethylene oxide content may be determined according to ASTM D4875.

The process of the present invention is a batch process. In a batch process, the desired product which in the present invention is polyether alcohol P, is not continuously prepared in a reactor but is prepared during a certain period of time in the reactor, after which at least part of the product is recovered, after which a new batch can be started.

In the present invention, polyether alcohol P has a hydroxyl number of equal to or lower than 115 mg KOH/g, suitably lower than 115 mg KOH/g. The hydroxyl number of polyether alcohol P may be at least 2 mg KOH/g or at least 4 mg KOH/g or at least 6 mg KOH/g or at least 8 mg KOH/g or at least 10 mg KOH/g or at least 15 mg KOH/g or at least 20 mg KOH/g or at least 25 mg KOH/g or at least 30 mg KOH/g or at least 35 mg KOH/g or at least 40 mg KOH/g or at least 45 mg KOH/g or at least 50 mg KOH/g. Further, the hydroxyl number of polyether alcohol P is at most 115 mg KOH/g and may be at most 100 mg KOH/g or at most 90 mg KOH/g or at most 80 mg KOH/g or at most 70 mg KOH/g or at most 60 mg KOH/g or at most 50 mg KOH/g or at most 40 mg KOH/g or at most 30 mg KOH/g or at most 20 mg KOH/g.

Further, in the present invention, polyether alcohol P contains ether linkages (or ether units). Further, said polyether alcohol may additionally contain ester linkages (or ester units) and/or carbonate linkages (or carbonate units). It is preferred that said polyether alcohol does not contain ester linkages (or ester units). Further, it is preferred that said polyether alcohol does not contain carbonate linkages (or carbonate units). Still further, said polyether alcohol may consist of ether linkages.

Still further, in the present invention, polyether alcohol P contains one or more hydroxyl groups. Thus, polyether alcohol P may be a polyether monol or a polyether polyol. A monol is an alcohol containing one hydroxyl group, whereas a polyol is an alcohol containing two or more hydroxyl groups.

In step a) of the present process, a starter mixture comprising starter compound S₁ and a composite metal cyanide complex catalyst is formed. Step a) is performed before steps b) and c) are performed. Preferably, in step a), the starter mixture is formed in a reactor. Alternatively, said starter mixture may be formed outside the reactor after which the reactor is charged with the thus obtained starter mixture.

Thus, in the process of the present invention, a composite metal cyanide complex catalyst is used. Composite metal cyanide complex catalysts are frequently also referred to as double metal cyanide (DMC) catalysts. A composite metal cyanide complex catalyst is typically represented by the following formula (1):

(1) M¹ₐ;[M²_{b}(CN)_{c}]_{d.}e(M¹_{f}X_{g}) _{.h} (H₂0) .i(R)

wherein each of M¹ and M² is a metal, X is a halogen atom, R is an organic ligand, and each of a, b, c, d, e, f, g, h and i is a number which is variable depending upon the atomic balances of the metals, the number of organic ligands to be coordinated, etc.

In the above formula (1), M¹ is preferably a metal selected from Zn(II) or Fe(II). In the above formula, M² is preferably a metal selected from Co(III) or Fe(III). However, other metals and oxidation states may also be used, as is known in the art.

In the above formula (1), R is an organic ligand and is preferably at least one compound selected from the group consisting of an alcohol, an ether, a ketone, an ester, an amine and an amide. As such an organic ligand, a watersoluble one may be used. Specifically, one or more compounds selected from tert-butyl alcohol, n-butyl alcohol, iso-butyl alcohol, tert-pentyl alcohol, isopentyl alcohol, N, N-dimethyl acetamide, glyme (ethylene glycol dimethyl ether), diglyme (diethylene glycol dimethyl ether), triglyme (triethylene glycol dimethyl ether), ethylene glycol mono-tert-butylether, iso-propyl alcohol and dioxane, may be used as organic ligand(s). The dioxane may be 1,4-dioxane or 1,3-dioxane and is preferably 1,4-dioxane. Most preferably, the organic ligand or one of the organic ligands in the composite metal cyanide complex catalyst is tert-butyl alcohol. Further, as an alcohol organic ligand, a polyol, preferably a polyether polyol may be used. More preferably, a poly (propylene glycol) having a number average molecular weight in the range of from 500 to 2,500 Dalton, preferably 800 to 2,200 Dalton, may be used as the organic ligand or one of the organic ligands. Most preferably, such poly(propylene glycol) is used in combination with tert-butyl alcohol as organic ligands. The composite metal cyanide complex catalyst can be produced by known production methods.

In the present invention, starter compound S₁ meets one or both of the following two requirements (I) and (II):
(I) starter compound S₁ has a nominal functionality which equals the nominal functionality of polyether alcohol P and a hydroxyl number which is within 10% of the hydroxyl number of polyether alcohol P and/or
(II) starter compound S₁ has an equivalent weight of from 10 to 10,000 g/mol.

Thus, in the present invention, compound S₁ may meet requirement (I) only or may meet requirement (II) only or may meet both requirements (I) and (II).

Under requirement (I), starter compound S₁ has a hydroxyl number which is within 10% of the hydroxyl number of polyether alcohol P. This means that under requirement (I), the hydroxyl number of starter compound S₁ does not differ by more than 10% from the hydroxyl number of polyether alcohol P. Preferably, under requirement (I), starter compound S₁ has a hydroxyl number which is within 8%, more preferably within 6%, more preferably within 4%, more preferably within 2%, most preferably within 1% of the hydroxyl number of polyether alcohol P. Further, starter compound S₁ may have a hydroxyl number which equals the hydroxyl number of polyether alcohol P.

Requirement (I) is met in a case wherein a portion of polyether alcohol P as prepared in a previous batch in accordance with the process of the present invention, is used as starter compound S₁ in a next batch in accordance with the process of the present invention. Thus, starter compound S₁ may comprise the same product as the final targeted product (polyether alcohol P). Up to 50 wt.% or up to 40 wt.% or up to 30 wt.% or up to 20 wt.% or up to 10 wt.% or up to 5 wt.% of the total weight of polyether alcohol P as prepared in said previous batch may be used as starter compound S₁ in said next batch. At the end of a batch process a portion of said polyether alcohol P thus prepared may be left in a reactor (generally also referred to as "heel") and be used as starter compound S₁ in the next batch. It is also possible that said polyether alcohol P thus prepared is first stored in a separate storage vessel, and that later a portion thereof is brought back into the reactor and used as starter compound S₁ in the next batch. Prior to step a) of the present process, above-mentioned "heel" may be subjected to a pre-treatment, wherein such pre-treatment may for example comprise stripping using a stripping gas in order to remove light compounds (such as moisture) and/or refining in order to remove or neutralize any non-DMC catalyst (such as KOH) used in a previous batch.

Under requirement (II), starter compound S₁ has an equivalent weight of from 10 to 10,000 g/mol. Under said requirement (II), starter compound S₁ may have an equivalent weight of at least 40 g/mol or at least 45 g/mol or at least 50 g/mol or at least 55 g/mol or at least 65 g/mol or at least 80 g/mol or at least 100 g/mol or at least 120 g/mol or at least 140 g/mol or at least 160 g/mol or at least 180 g/mol or at least 200 g/mol. Further, under said requirement (II), starter compound S₁ may have an equivalent weight of at most 8,000 g/mol or at most 6,000 g/mol or at most 4,000 g/mol or at most 3,000 g/mol or at most 2,700 g/mol or at most 2,400 g/mol or at most 2,200 g/mol or at most 2,000 g/mol or at most 1,500 g/mol or at most 1,000 g/mol or at most 500 g/mol or at most 450 g/mol or at most 400 g/mol or at most 350 g/mol or at most 300 g/mol or at most 280 g/mol or at most 250 g/mol.

Further, under requirement (II), starter compound S₁ may have a functionality of from 1 to 8, preferably of from 2 to 6, more preferably of from 2 to 4, more preferably of from 2.5 to 3.5, most preferably of from 2.7 to 3.3.

A case wherein only requirement (II) is met, and requirement (I) is not met, is a case wherein in a previous batch another polyether alcohol (another grade) is prepared, which has a nominal functionality which is different from that of the desired polyether alcohol P to be made in the next batch and/or which has a hydroxyl number which differs by more than 10% from the hydroxyl number of said polyether alcohol P. When such grade change is carried out, a portion of the other polyether alcohol as prepared in a previous batch, may be used as starter compound S₁ in a next batch wherein polyether alcohol P is prepared in accordance with the process of the present invention. Thus, starter compound S₁ may comprise a product which is different from the final targeted product (polyether alcohol P). Up to 50 wt.% or up to 40 wt.% or up to 30 wt.% or up to 20 wt.% or up to 10 wt.% or up to 5 wt.% of the total weight of said other polyether alcohol as prepared in said previous batch may be used as starter compound S₁ in said next batch. At the end of a batch process a portion of said other polyether alcohol thus prepared may be left in a reactor (generally also referred to as "heel") and be used as starter compound S₁ in the next batch wherein polyether alcohol P is prepared. It is also possible that said other polyether alcohol thus prepared is first stored in a separate storage vessel, and that later a portion thereof is brought back into the reactor and used as starter compound S₁ in the next batch wherein polyether alcohol P is prepared. Prior to step a) of the present process, above-mentioned "heel" may be subjected to a pre-treatment, wherein such pre-treatment may for example comprise stripping using a stripping gas in order to remove light compounds (such as moisture) and/or refining in order to remove or neutralize any non-DMC catalyst (such as KOH) used in a previous batch.

The amount of starter compound S₁ used in step a) of the present process, on the basis of the total weight of final product (polyether alcohol P) in the reactor, may vary within wide ranges. Said proportion may be of from 1 to 80 wt.%, or 3 to 70 wt.%, or 5 to 60 wt.%, or 7 to 50 wt.2, or 8 to 40 wt.%. Said proportion is related to the so-called "build ratio" which in the present specification is defined as the ratio of the total weight of final product in the reactor to the weight of starter compound S₁.

Starter compound S₁ may consist of one starter compound which meets one or both of requirements (I) and (II). Alternatively, starter compound S₁ may consist of a mixture of two or more starter compounds, suitably two starter compounds, each of which meets one or both of requirements (I) and (II). In the latter case, for example, one of the starter compounds may meet requirements (I) and (II) whereas another starter compound may only meet requirement (II). Further, additionally, in step a) of the present process, one or more starter compounds other than starter compound S₁, may be used in forming the starter mixture. Preferably, in the present invention, starter compounds not meeting any one of requirements (I) and (II) are not used in step a).

In the present process, step c) starts before step b), which means that the addition of continuously added starter compound S₂ is started before starting the continuous addition of alkylene oxide. Thus, in the present invention, first starter compound S₂ is started being continuously added to the starter mixture, which is initially formed in step a) and which comprises (i) DMC catalyst and (ii) starter compound S₁, wherein starter compound S₁ may be above-described "heel" comprising polyether alcohol P as prepared in a previous batch in accordance with the process of the present invention, before the continuous addition of alkylene oxide in step b) is started. Advantageously, by adding starter compound S₂ before adding any alkylene oxide, the polydispersity and viscosity of the final polyether alcohol P may be reduced, which may be demonstrated by a relatively small fraction of high molecular weight polyether alcohol in total polyether alcohol P. A relatively low polydispersity is indicative of a relatively narrow molecular weight distribution.

In step a) of the present process, a starter mixture comprising starter compound S₁ and a composite metal cyanide complex catalyst is formed. In step a), starter compound S₁ may be combined with composite metal cyanide complex catalyst as described above, wherein said catalyst to be combined with starter compound S₁ preferably comprises fresh composite metal cyanide complex catalyst. Within the present specification, a "fresh" catalyst means a not-activated catalyst which has not been used as a catalyst in a chemical process before, in specific a not-activated catalyst which has not been exposed to alkylene oxide before. The fresh catalyst is, however, suitable to be used as a catalyst in a chemical process, which means that it is a final catalyst obtained as the product in a catalyst preparation process, and not any intermediate catalyst or catalyst precursor. Within the present specification, a "used" catalyst means a catalyst which has been used as a catalyst in a chemical process before, in specific a catalyst which has been exposed to alkylene oxide before.

Above-mentioned fresh composite metal cyanide complex catalyst which is preferably used in step a) should be distinguished from any composite metal cyanide complex catalyst that may be present in starter compound S₁ before forming, in said step a), a starter mixture comprising starter compound S₁ and a composite metal cyanide complex catalyst which preferably comprises fresh composite metal cyanide complex catalyst. Composite metal cyanide complex catalyst present in starter compound S₁ before step a), may originate from a previous batch wherein a composite metal cyanide complex catalyst is also used in preparing a polyether alcohol, a portion of which polyether alcohol may subsequently be used as starter compound S₁ in a next batch wherein polyether alcohol P is prepared in accordance with the process of the present invention. Hence, starter compound S₁ may comprise a used composite metal cyanide complex catalyst. Further, preferably, starter compound S₁ does not comprise a fresh composite metal cyanide complex catalyst.

Hence, in the present invention, polyether alcohol P is prepared in the presence of a composite metal cyanide complex catalyst which comprises (i) composite metal cyanide complex catalyst used in step a) to form a starter mixture comprising starter compound S₁ and said catalyst, which catalyst (i) is activated in step a), as further discussed below, and preferably comprises fresh catalyst, and (ii) optionally composite metal cyanide complex catalyst present in starter compound S₁ before step a), which catalyst (ii) may be activated in step a), as further discussed below, and may comprise used catalyst.

In the present invention, starter compound S₂ is added in step c) and step c) starts before step b). In the present invention, polyether alcohol P is prepared in a reactor. Step a) may be performed partially (i.e. catalyst activation only) or completely within the reactor or, alternatively, may be performed partially (i.e. formation of starter mixture before catalyst activation) or completely outside the reactor after which the reactor is charged with the thus obtained starter mixture. Steps b) and c) are performed within the reactor, meaning that in step b) alkylene oxide is continuously added to the reactor, and in step c) starter compound S₂ is continuously added to the reactor.

Further, in the present invention, no alkylene oxide is added between steps a) and b). This means that in the present invention, alkylene oxide is only added in steps a) and b). Further, in the present invention, the continuous addition of alkylene oxide in step b) is not interrupted before the total weight of alkylene oxide needed to prepare polyether alcohol P has been added. This means that in the present invention, the continuous addition of alkylene oxide in step b) is not discontinued temporarily but is only stopped once the total weight of alkylene oxide needed to prepare polyether alcohol P has been added.

In the present invention, in step a), an alkylene oxide is added to the starter mixture comprising starter compound S₁ and the composite metal cyanide complex catalyst, in order to activate said catalyst. A relatively small amount of alkylene oxide may be sufficient to achieve such catalyst activation. The amount of alkylene oxide added in step a) may be of from 0.5 to 20 wt.% or of from 1 to 15 wt.% or of from 2 to 10 wt.%, based on the weight of the starter mixture before adding the alkylene oxide (i.e. the alkylene oxide added to activate the catalyst). Any alkylene oxide may be added in step a) to achieve such catalyst activation. The alkylene oxide added in step a) may comprise one or more of propylene oxide, ethylene oxide and butylene oxide, preferably propylene oxide and/or butylene oxide, most preferably only propylene oxide. Further, as mentioned above, no alkylene oxide is added between steps a) and b). Still further, (i) completing the addition of alkylene oxide in step a) and (ii) starting the continuous alkylene oxide addition in step b) do not immediately follow each other. For step b) is only started after the catalyst is activated in step a). Such catalyst activation can be confirmed by a drop in the pressure of alkylene oxide in the reactor. Such pressure drop indicates that alkylene oxide reacts away and hence the catalyst is activated.

As mentioned above, in the present invention, alkylene oxide is only added in steps a) and b), and the continuous addition of alkylene oxide in step b) is only stopped once the total weight of alkylene oxide needed to prepare polyether alcohol P has been added. Said alkylene oxide added in step b) may comprise one or more of propylene oxide, ethylene oxide and butylene oxide, preferably propylene oxide and ethylene oxide, most preferably only propylene oxide.

Polyether alcohol P prepared in the process of the present invention, comprises polyether chains preferably containing propylene oxide content, optionally butylene oxide content and optionally ethylene oxide content.

The propylene oxide content of polyether alcohol P may be at least 10% or at least 20 wt.% or at least 30 wt.% or at least 40% or at least 50 wt.% or at least 60 wt.% or at least 70 wt.% or at least 80 wt.% or at least 90 wt.% or at least 95 wt.% or at least 99 wt.%. Further, the propylene oxide content of polyether alcohol P may be at most 100 wt.% or at most 90 wt.% or at most 80 wt.% or at most 70 wt.% or at most 60 wt.% or at most 50 wt.% or at most 40 wt.% or at most 30 wt.% or at most 20 wt.%.

The ethylene oxide content of polyether alcohol P may be 0 wt.% or at least 3 wt.% or at least 5 wt.% or at least 10 wt.% or at least 12 wt.% or at least 15 wt.% or at least 20 wt.% or at least 30 wt.% or at least 40% or at least 50 wt.% or at least 60 wt.% or at least 70 wt.% or at least 80 wt.% or at least 90 wt.%. Further, the ethylene oxide content of polyether alcohol P may be at most 90 wt.% or at most 80 wt.% or at most 70 wt.% or at most 60 wt.% or at most 50 wt.% or at most 40 wt.% or below 30 wt.% or at most 25 wt.% or at most 20 wt.% or at most 15 wt.% or at most 12 wt.%.

The polyether chains of the polyether alcohol P may comprise no ethylene oxide content but may comprise only propylene oxide and/or butylene oxide content, suitably only propylene oxide content.

Further, polyether alcohol P may comprise primary hydroxyl groups. The primary hydroxyl content of the polyether alcohol P may be 0% or at least 1% or at least 3% or at least 5% or at least 10% or at least 20% or at least 30%. Further, the primary hydroxyl content of polyether alcohol P may be at most 90% or at most 80% or at most 70% or at most 60% or at most 50% or at most 40% or at most 30% or at most 20% or at most 15% or at most 10% or at most 5%.

Further, polyether alcohol P may have a functionality of from 0.8 to 8, preferably of from 1 to 8, more preferably of from 2 to 6, more preferably of from 2 to 4, more preferably of from 2.5 to 3.5, most preferably of from 2.7 to 3.3.

Preferably, in the beginning of step b), the addition rate of alkylene oxide is increased till a target addition rate is reached which is then preferably maintained till the end of step b).

In the present invention, starter compound S₂ has an equivalent weight of from 10 to 300 g/mol. Preferably, starter compound S₂ has an equivalent weight of from 10 to 250 g/mol, more preferably 10 to 200 g/mol, more preferably 10 to 150 g/mol, more preferably 10 to 100 g/mol, more preferably 10 to 80 g/mol, more preferably 10 to 70 g/mol, more preferably 10 to 60 g/mol, more preferably 20 to 50 g/mol, more preferably 25 to 40 g/mol, most preferably 30 to 35 g/mol.

Further, preferably, starter compound S₂ is a polyfunctional alcohol, generally containing from 1 to 8 or 2 to 6 or 2 to 4 hydroxyl groups. Examples of such alcohols comprise n-butanol, allyl alcohol, glycols, glycerol, pentaerythritol, trimethylolpropane, triethanolamine, sorbitol, mannitol and sucrose. Preferably, starter compound S₂ is selected from the group consisting of glycols, glycerol, pentaerythritol, trimethylolpropane, triethanolamine, sorbitol and mannitol. Advantageously, monopropylene glycol (MPG), glycerol or a combination of both may be used as starter compound S₂.

In the present invention, step c) starts before step b). It is preferred that step b) starts before 4 wt.% or before 3 wt.% or before 2 wt.% or before 1 wt.% or before 0.5 wt.% of the total weight of starter compound S₂ needed to prepare polyether alcohol P has been added in step c).

Preferably, in the beginning of step c), the addition rate of starter compound S₂ is increased till a target addition rate is reached which is then preferably maintained till the end of step c).

Further, in the present invention, it is preferred that once above-mentioned target addition rates for the alkylene oxide and starter compound S₂ have been reached, the weight ratio of the addition rate of the alkylene oxide to the addition rate of starter compound S₂ is of from 2:1 to 10:1 or of from 3:1 to 8:1. In specific, it is preferred that the latter weight ratio is smaller than the weight ratio before said target addition rates have been reached, in which earlier stage the weight ratio of the addition rate of the alkylene oxide to the addition rate of starter compound S₂ may be of from 8:1 to 30:1 or of from 10:1 to 20:1.

In the present invention, it is preferred that step c) is stopped before step b) is stopped. In particular, step c) may be stopped once of from 5 to 99% or of from 10 to 99% or of from 15 to 99% or of from 20 to 99% or of from 25 to 99% or of from 30 to 99% or of from 50 to 99% or of from 60 to 97% or of from 70 to 95% or of from 75 to 93% or of from 80 to 90% or of from 80 to 87% of the total weight of alkylene oxide needed to prepare polyether alcohol P has been added in step b). Advantageously, by stopping step c), wherein starter compound S₂ is continuously added, at a relatively late stage before step b), the polydispersity and viscosity of the final polyether alcohol P may be reduced, which may be demonstrated by a relatively small fraction of high molecular weight polyether alcohol in total polyether alcohol P. A relatively low polydispersity is indicative of a relatively narrow molecular weight distribution.

Further, in the present invention, it is preferred that the total amount of starter compound S₂ added in step c) may be of from 0.1 to 25 wt.% or of from 0.5 to 25 wt.% or of from 2 to 25 wt.% or of from 5 to 25 wt.% or of from 6 to 22 wt.% or of from 10 to 18 wt.%, based on the sum of the total amount of starter compound S₂ added in step c) and the total amount of alkylene oxide added in step b).

Further, the present invention relates to a polyether alcohol obtainable by the above-mentioned process.

The present invention also relates to a process for preparing a polyurethane foam comprising reacting a polyether alcohol and a polyisocyanate in the presence of a blowing agent, wherein the polyether alcohol is a polyether alcohol obtained or obtainable by the above-mentioned batch process and wherein the polyether alcohol is preferably a polyether polyol as described above.

Further, the present invention relates to a process for preparing a polyurethane foam comprising preparing a polyether alcohol P having a hydroxyl number of equal to or lower than 115 mg KOH/g in accordance with the above-mentioned batch process, followed by reacting the polyether alcohol and a polyisocyanate in the presence of a blowing agent.

In the above-mentioned process for preparing a polyurethane foam, the polyether alcohol is reacted with a polyisocyanate in the presence of a blowing agent.

The polyisocyanate may comprise an aromatic polyisocyanate or an aliphatic polyisocyanate, preferably an aromatic polyisocyanate.

The aromatic polyisocyanate may for example comprise tolylene diisocyanate (TDI) or polymeric TDI, xylylene diisocyanate, tetramethylxylylene diisocyanate, methylene diphenyl diisocyanate (MDI) or polymeric MDI (i.e. polymethylene polyphenyl isocyanate), or a modified product thereof. Preferably, the aromatic polyisocyanate comprises tolylene diisocyanate (TDI), i.e. non-polymeric TDI. The TDI may be a mixture of 80 wt.% of 2,4-TDI and 20 wt.% of 2,6-TDI, which mixture is sold as "TDI-80".

Further, the aliphatic polyisocyanate may for example comprise hexamethylene diisocyanate, dicyclohexylmethane diisocyanate, lysine diisocyanate or isophorone diisocyanate, or a modified product thereof.

Further, the polyisocyanate may comprise any mixture of two or more of the polyisocyanates mentioned above. For example, the polyisocyanate may comprise a mixture of TDI and MDI, in particular a mixture wherein the weight ratio of TDI:MDI varies from 10:90 to 90:10.

The blowing agent may comprise a chemical blowing agent and/or a physical (non-chemical) blowing agent. Within the present specification, by "chemical blowing agent" reference is made to a blowing agent that may only provide a blowing effect after it has chemically reacted with another compound. In case the blowing agent comprises a chemical blowing agent, said chemical blowing agent preferably comprises water. Water reacts with isocyanate groups of the polyisocyanate, thereby releasing carbon dioxide which causes the blowing to occur.

However, other suitable blowing agents, such as for example, acetone, gaseous or liquid carbon dioxide, halogenated hydrocarbons, aliphatic alkanes and alicyclic alkanes may be employed additionally or alternatively.

Due to the ozone depleting effect of fully chlorinated, fluorinated alkanes (CFC's) the use of this type of blowing agent is generally not preferred, although it is possible to use them. Halogenated alkanes, wherein at least one hydrogen atom has not been substituted by a halogen atom (including the so-called HCFC's) have no or less ozone depleting effect and therefore are the preferred halogenated hydrocarbons to be used in physically blown foams. One suitable HCFC type blowing agent is 1-chloro-1,1-difluoroethane. Another suitable halogenated alkane of this type for use as a blowing agent, is methylene chloride (dichloromethane).

The above blowing agents may be used singly or in mixtures of two or more.

The amount of the blowing agent(s) is determined by the desired density of the polyurethane foam to be prepared. For example, a relatively low density can be obtained by using a relatively high amount of the blowing agent(s), and vice versa. A skilled person can readily determine the amount of blowing agent (physical and/or chemical blowing agent) needed to obtain a desired foam density.

Water may be used as a blowing agent in an amount which is at least 0.1 part per hundred parts by weight of polyether alcohol (pphp) or at least 0.5 pphp or at least 1 pphp. Further, water may be used as a blowing agent in an amount which is at most 10 parts per hundred parts by weight of polyether alcohol (pphp) or at most 5 pphp or at most 3 pphp or at most 2 pphp.

In case of halogenated hydrocarbons, aliphatic alkanes and alicyclic alkanes, the amount of the blowing agent may be of from 1 to 50 parts per hundred parts by weight of polyether alcohol (pphp), suitably of from 1 to 30 pphp, more suitably of from 1 to 20 pphp.

Further, preferably, the polyurethane foam which may be prepared is a flexible polyurethane foam. Further, said flexible polyurethane foam is suitably a slabstock foam. Within the present specification, by "slabstock foam" reference is made to a foam that is made by applying a free rise (unconstrained rise) of the foam.

The isocyanate index (or NCO index) may vary within wide ranges and may be of from 60 to 120. In particular, the isocyanate index may be at most 120, more suitably at most 110, more suitably at most 100, most suitably at most 90. Further, the isocyanate index is preferably higher than 60 and may be at least 70 or at least 80 or at least 90.

Within the present specification, "isocyanate index" is calculated as 100 times the mole ratio of -NCO groups (isocyanate groups) to NCO-reactive groups in the reaction mixture. In other words, the isocyanate index is defined as: [(actual amount of isocyanate)/(theoretical amount of isocyanate)]*100, wherein the "theoretical amount of isocyanate" equals 1 equivalent isocyanate (NCO) group per 1 equivalent isocyanate-reactive group.

Such "isocyanate-reactive groups" as referred to above include for example OH groups from the polyether alcohol and from any water that may be used as a blowing agent. Isocyanate groups also react with water.

Additionally, other components may also be present during the above-mentioned polyurethane foam preparation process, such as one or more polyurethane catalysts, surfactants and/or cross-linking agents.

Polyurethane catalysts are known in the art and include many different compounds. Suitable catalysts include tin-, lead- or titanium-based catalysts, preferably tin-based catalysts, such as tin salts and dialkyl tin salts of carboxylic acids. Specific examples are stannous octoate, stannous oleate, dibutyltin dilaureate, dibutyltin acetate and dibutyltin diacetate. Other suitable catalysts are tertiary amines, such as, for instance, bis(2,2'-dimethylamino)ethyl ether, trimethylamine, triethylamine, triethylenediamine and dimethylethanolamine (DMEA). Examples of commercially available tertiary amine catalysts are those sold under the tradenames Niax, Tegoamin and Dabco (all trademarks). The catalyst is typically used in an amount of from 0.01 to 2.0 parts by weight per hundred parts by weight of polyether alcohol (php). Preferred amounts of catalyst are from 0.05 to 1.0 php.

The use of foam stabilisers (surfactants) is well known. Organosilicone surfactants are most conventionally applied as foam stabilisers in polyurethane production. A large variety of such organosilicone surfactants is commercially available. Usually, such foam stabiliser is used in an amount of from 0.01 to 5.0 parts by weight per hundred parts by weight of polyether alcohol (pphp). Preferred amounts of stabiliser are from 0.25 to 2.0 pphp, more preferably of from 0.75 to 1.5 pphp.

The use of cross-linking agents in the production of polyurethane foams is also well known. Polyfunctional glycol amines are known to be useful for this purpose. The polyfunctional glycol amine which is most frequently used and is also useful in the preparation of polyurethane foams, especially flexible polyurethane foams, is diethanolamine, often abbreviated as DEOA. A cross-linking agent may be applied in amounts up to 2 parts by weight per hundred parts by weight of polyether alcohol (pphp), but amounts in the range of from 0.01 to 0.5 pphp are most suitably applied.

In addition, other well-known auxiliaries, such as colorants, flame retardants and fillers, may also be used during the above-mentioned polyurethane foam preparation process.

Said polyurethane foam preparation process may involve combining the polyisocyanate, the polyether alcohol, the blowing agent, a catalyst and optionally surfactant, crosslinker, flame retardant, colorant and/or filler, in any suitable manner to obtain the polyurethane foam. For example, said process may comprise mixing the polyether alcohol, the blowing agent, a catalyst and any other optional component(s) except the polyisocyanate, and then adding the polyisocyanate.

Further, the above-mentioned polyurethane foam preparation process may comprise forming the foam into a shaped article before it fully sets. Suitably, forming the foam may comprise pouring the liquid mixture containing all components into a mould before gelling is complete.

Further, the present invention relates to a polyurethane foam obtainable by the above-mentioned process for preparing a polyurethane foam, and to a shaped article comprising a polyurethane foam obtained or obtainable by said process.

## Claims

1. A batch process for preparing a polyether alcohol P having a hydroxyl number of equal to or lower than 115 mg KOH/g by reacting starter compound S₁ and starter compound S₂, which starter compounds have one active hydrogen atom or a plurality of active hydrogen atoms, with one or more alkylene oxides in the presence of a composite metal cyanide complex catalyst, comprising
a) forming a starter mixture comprising starter compound S₁ and the catalyst and activating the catalyst by adding an alkylene oxide, followed by
b) continuously adding an alkylene oxide; and
c) continuously adding starter compound S₂;
wherein
starter compound S₁ has (I) a nominal functionality which equals the nominal functionality of polyether alcohol P and a hydroxyl number which is within 10% of the hydroxyl number of polyether alcohol P and/or (II) an equivalent weight of from 10 to 10,000 g/mol, wherein the nominal functionality, the hydroxyl number and the equivalent weight are determined as indicated in the specification;
starter compound S₂ has an equivalent weight of from 10 to 300 g/mol;
no alkylene oxide is added between steps a) and b), and the continuous addition of alkylene oxide in step b) is not interrupted before the total weight of alkylene oxide needed to prepare polyether alcohol P has been added; and
step c) starts before step b).

2. The process according to claim 1, wherein in step a) of from 0.5 to 20 wt.% of alkylene oxide, based on the weight of the starter mixture before adding the alkylene oxide, is added.

3. The process according to claim 1 or 2, wherein in step a) starter compound S₁ is combined with fresh composite metal cyanide complex catalyst, wherein the term "fresh" has the meaning indicated in the specification.

4. The process according to any one of claims 1 to 3, wherein step c) is stopped before step b) is stopped.

5. The process according to claim 4, wherein step c) is stopped once of from 5 to 99% of the total weight of alkylene oxide needed to prepare polyether alcohol P has been added in step b).

6. The process according to any one of claims 1 to 5, wherein the alkylene oxide added in step b) comprises one or more of propylene oxide, ethylene oxide and butylene oxide.

7. A polyether alcohol obtainable by the process according to any one of claims 1-6.

8. A process for preparing a polyurethane foam comprising reacting a polyether alcohol and a polyisocyanate in the presence of a blowing agent, wherein the polyether alcohol is a polyether alcohol obtained by the process according to any one of claims 1-6 or the polyether alcohol according to claim 7.

9. A polyurethane foam obtainable by the process according to claim 8.

10. A shaped article comprising a polyurethane foam obtained by the process according to claim 8 or the polyurethane foam according to claim 9.

## Patentansprüche

1. Batch-Verfahren zum Herstellen eines Polyetheralkohols P, der eine Hydroxylzahl von gleich oder kleiner als 115 mg KOH/g aufweist, durch Umsetzen einer Starterverbindung S₁ und einer Starterverbindung S₂, wobei die Starterverbindungen ein aktives Wasserstoffatom oder eine Vielzahl von aktiven Wasserstoffatomen aufweisen, mit einem oder mehreren Alkylenoxiden in der Gegenwart eines Verbundmetallcyanidkomplexkatalysators, umfassend
a) Ausbilden einer Startermischung, umfassend die Starterverbindung S₁ und den Katalysator, und Aktivieren des Katalysators durch Zugeben eines Alkylenoxids, gefolgt durch
b) kontinuierliches Zugeben eines Alkylenoxids; und
c) kontinuierliches Zugeben der Starterverbindung S₂;
wobei
die Starterverbindung S₁ (I) eine nominale Funktionalität, die der nominalen Funktionalität des Polyetheralkohols P gleichkommt, und eine Hydroxylzahl, die innerhalb von 10 % der Hydroxylzahl des Polyetheralkohols P liegt, und/oder (II) ein Äquivalentgewicht von 10 bis 10.000 g/mol aufweist, wobei die nominale Funktionalität, die Hydroxylzahl und das Äquivalentgewicht wie in der Patentschrift angegeben bestimmt werden;
die Starterverbindung S₂ ein Äquivalentgewicht von 10 bis 300 g/mol aufweist;
kein Alkylenoxid zwischen den Schritten a) und b) zugegeben wird und die kontinuierliche Zugabe von Alkylenoxid in Schritt b) nicht unterbrochen wird, bevor das Gesamtgewicht an Alkylenoxid, das benötigt wird, um den Polyetheralkohol P herzustellen, zugegeben wurde; und
Schritt c) vor Schritt b) startet.

2. Verfahren nach Anspruch 1, wobei in Schritt a) zu 0,5 bis 20 Gew.-% Alkylenoxid, basierend auf dem Gewicht der Startermischung vor dem Zugeben des Alkylenoxids, zugegeben werden.

3. Verfahren nach Anspruch 1 oder 2, wobei in Schritt a) die Starterverbindung S₁ mit einem frischen Verbundmetallcyanidkomplexkatalysator kombiniert wird, wobei der Begriff "frisch" die in der Patentschrift angegebene Bedeutung aufweist.

4. Verfahren nach einem der Ansprüche 1 bis 3, wobei Schritt c) gestoppt wird, bevor Schritt b) gestoppt wird.

5. Verfahren nach Anspruch 4, wobei Schritt c) gestoppt wird, sobald 5 bis 99 % des Gesamtgewichts an Alkylenoxid, das benötigt wird, um den Polyetheralkohol P herzustellen, in Schritt b) zugegeben wurde.

6. Verfahren nach einem der Ansprüche 1 bis 5, wobei das in Schritt b) zugegebene Alkylenoxid eines oder mehrere von Propylenoxid, Ethylenoxid und Butylenoxid umfasst.

7. Polyetheralkohol, der durch das Verfahren nach einem der Ansprüche 1 bis 6 gewinnbar ist.

8. Verfahren zum Herstellen eines Polyurethanschaums, umfassend das Umsetzen eines Polyetheralkohols und eines Polyisocyanats in der Gegenwart eines Treibmittels, wobei der Polyetheralkohol ein durch das Verfahren nach einem der Ansprüche 1 bis 6 gewonnener Polyetheralkohol oder der Polyetheralkohol nach Anspruch 7 ist.

9. Polyurethanschaum, der durch das Verfahren nach Anspruch 8 gewinnbar ist.

10. Geformtes Erzeugnis, umfassend einen durch das Verfahren nach Anspruch 8 gewonnenen Polyurethanschaum oder den Polyurethanschaum nach Anspruch 9.

## Revendications

1. Procédé discontinu de préparation d'un alcool de polyéther P présentant un nombre d'hydroxyle inférieur ou égal à 115 mg KOH/g par réaction d'un composé de départ S₁ et d'un composé de départ S₂, lesquels composés de départ présentent un atome d'hydrogène actif ou une pluralité d'atomes d'hydrogène actifs, avec un ou plusieurs oxydes d'alkylène en présence d'un catalyseur complexe de cyanure métallique composite, comprenant
a) la formation d'un mélange de départ comprenant le composé de départ S₁ et le catalyseur et l'activation du catalyseur par l'ajout d'un oxyde d'alkylène, en faisant suivre par
b) l'ajout en continu d'un oxyde d'alkylène ; et
c) l'ajout en continu du composé de départ S₂ ;
dans lequel
le composé de départ S₁ a (I) une fonctionnalité nominale qui est égale à la fonctionnalité nominale de l'alcool de polyéther P et un nombre d'hydroxyle qui est à plus ou moins 10 % du nombre d'hydroxyle de l'alcool de polyéther P et/ou (II) un poids équivalent allant de 10 à 10 000 g/mol, dans lequel la fonctionnalité nominale, le nombre d'hydroxyle et le poids équivalent sont déterminés comme indiqué dans la spécification ;
le composé de départ S₂ a un poids équivalent allant de 10 à 300 g/mol ;
aucun oxyde d'alkylène n'est ajouté entre les étapes a) et b), et l'ajout continu d'oxyde d'alkylène à l'étape b) n'est pas interrompu avant que le poids total de l'oxyde d'alkylène nécessaire pour préparer l'alcool de polyéther P ait été ajouté ; et
l'étape c) commence avant l'étape b).

2. Procédé selon la revendication 1, dans lequel à l'étape a), de 0,5 à 20 % en poids d'oxyde d'alkylène, en fonction du poids du mélange de départ avant l'ajout de l'oxyde d'alkylène, sont ajoutés.

3. Procédé selon la revendication 1 ou 2, dans lequel à l'étape a), le composé de départ S₁ est combiné avec un catalyseur complexe de cyanure métallique composite frais, dans lequel le terme « frais » a la signification indiquée dans la spécification.

4. Procédé selon l'une quelconque des revendications 1 à 3, dans lequel l'étape c) est arrêtée avant que l'étape b) ne soit arrêtée.

5. Procédé selon la revendication 4, dans lequel l'étape c) est arrêtée une fois que de 5 à 99 % du poids total d'oxyde d'alkylène nécessaire pour préparer l'alcool de polyéther P ont été ajoutés à l'étape b).

6. Procédé selon l'une quelconque des revendications 1 à 5, dans lequel l'oxyde d'alkylène ajouté à l'étape b) comprend un ou plusieurs parmi oxyde de propylène, oxyde d'éthylène et oxyde de butylène.

7. Alcool de polyéther qui peut être obtenu par le procédé selon l'une quelconque des revendications 1 à 6.

8. Procédé permettant de préparer une mousse de polyuréthane comprenant la réaction d'un alcool de polyéther et d'un polyisocyanate en présence d'un agent gonflant, dans lequel l'alcool de polyéther est un alcool de polyéther obtenu par le procédé selon l'une quelconque des revendications 1 à 6 ou l'alcool de polyéther selon la revendication 7.

9. Mousse de polyuréthane qui peut être obtenue par le procédé selon la revendication 8.

10. Article façonné comprenant une mousse de polyuréthane obtenue par le procédé selon la revendication 8 ou une mousse de polyuréthane selon la revendication 9.
